(19) Europäisches Patentamt
European Patent Office
Office européen des brevets

(11) **EP 4 093 956 B1**

(12) **FASCICULE DE BREVET EUROPEEN**

(45) Date de publication et mention de la délivrance du brevet:
**14.08.2024 Bulletin 2024/33**

(21) Numéro de dépôt: **21700770.7**

(22) Date de dépôt: **18.01.2021**

(51) Classification Internationale des Brevets (IPC):
**F01N 13/10** *(2010.01)* **F01N 9/00** *(2006.01)*

(52) Classification Coopérative des Brevets (CPC):
**F01N 9/00;** F01N 13/10; F01N 2560/06;
F01N 2900/0404; F01N 2900/0414; F01N 2900/12;
F01N 2900/1404; F01N 2900/1411; Y02T 10/40

(86) Numéro de dépôt international:
**PCT/EP2021/050931**

(87) Numéro de publication internationale:
**WO 2021/148345 (29.07.2021 Gazette 2021/30)**

(54) **ESTIMATEUR ET PROCÉDÉ D'ESTIMATION D'UNE TEMPÉRATURE D'UN FLUX DE FLUIDE TRAVERSANT UN MOTEUR À COMBUSTION INTERNE**

SCHÄTZER UND VERFAHREN ZUM SCHÄTZEN DER TEMPERATUR EINES FLUIDSTROMS, DER DURCH EINEN VERBRENNUNGSMOTOR HINDURCHGEHT

ESTIMATOR AND METHOD FOR ESTIMATING A TEMPERATURE OF A FLUID FLOW PASSING THROUGH AN INTERNAL COMBUSTION ENGINE

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **21.01.2020 FR 2000569**

(43) Date de publication de la demande:
**30.11.2022 Bulletin 2022/48**

(73) Titulaire: **NEW H POWERTRAIN HOLDING, S.L.U.**
**47008 Valladolid (ES)**

(72) Inventeur: **SMIS-MICHEL, Vivien**
**91700 SAINTE GENEVIEVE DES BOIS (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
DE-A1- 102013 203 175    DE-A1- 102017 113 009

**Description**

La présente demande concerne un estimateur et un procédé d'estimation d'une température d'un flux de fluide traversant un moteur à combustion interne, en particulier dans un véhicule automobile.

Dans un véhicule automobile, le contrôle moteur est la technique de gestion d'un moteur à combustion interne du véhicule avec l'ensemble de ses capteurs et actionneurs. L'ensemble des lois de contrôle commande et des paramètres de caractérisation d'un moteur est contenu dans un calculateur appelé unité de contrôle électronique, également connu sous l'acronyme « UCE ».

Une des problématiques rencontrées par l'unité de contrôle électronique dans le cadre du contrôle moteur comprend l'acquisition de la température d'échappement du moteur à combustion interne.

L'acquisition de cette température est particulièrement importante car la température d'échappement impacte directement les catalyseurs de post-traitement. En particulier, les gaz peuvent brûler les suies situées dans le filtre à particules ou créer des fuites d'ammoniac dans les catalyseurs SCR si la température d'échappement est trop élevée. Par ailleurs, la température d'échappement est un facteur prépondérant dans l'énergie restant dans les gaz brûlés et a donc un impact considérable dans les stratégies de contrôle de la suralimentation du moteur. Ainsi, la bonne connaissance de cette température est cruciale pour protéger les composants en aval de la chaîne et pour gérer des stratégies spécifiques de régulation ou de contrôle du reste du moteur. Il est donc nécessaire de disposer d'une information précise et rapide de la température d'échappement.

La solution communément utilisée consistant à employer un capteur de température n'apporte pas pleine satisfaction. En effet, les capteurs présentent des temps de réponse assez longs, généralement de l'ordre de quelques secondes pour atteindre 60 % de l'écart de boucle, ce qui ne suffit pas pour réguler efficacement ou de protéger le système.

Pour pallier cet inconvénient, il a été proposé d'identifier un modèle linéaire de la réponse des capteurs sur des essais maîtrisés. En d'autres termes, on considère que le capteur est une entrée, la sortie étant une estimation de la température réelle des gaz. On pourra par exemple se rapporter au document EP 2 796 841 qui décrit un exemple d'un tel modèle linéaire.

Cependant, une telle solution est problématique dans la mesure où l'instabilité des modèles n'est pas maîtrisée dans le cas général, et où cette approche est incapable d'être couplée avec un autre modèle. Dans le document DE102013203175A1, une correction dynamique du capteur de température est déterminée.

Au vu de ce qui précède, l'invention a pour but de permettre une estimation plus précise et plus rapide d'une température d'un flux de fluide dans un moteur à combustion interne.

A cet effet, il est proposé un estimateur de température destiné à être incorporé dans un moteur à combustion interne de véhicule automobile, comprenant un premier module de réception d'un paramètre mesuré par un capteur situé dans un flux de fluide traversant le moteur à combustion interne, un second module de réception d'une donnée extérieure, et un module de détermination d'une température du flux de fluide.

Selon une caractéristique générale de cet estimateur, le module de détermination comprend un observateur apte à déterminer une température estimée du flux de fluide et un paramètre estimé lié au capteur, l'observateur étant configuré pour déterminer la température estimée du flux de fluide en tenant compte d'une erreur de mesure du paramètre estimé.

Une telle détermination permet d'améliorer la précision et le temps de réponse de l'estimation de température.

Selon un mode de réalisation, le capteur est un capteur de température, le paramètre estimé étant une estimation de la température indiquée par le capteur.

On peut en outre prévoir un module de réglage d'un gain de compensation d'une dynamique du fluide.

Un tel module de réglage permet d'ajuster la correction de l'erreur de mesure en tenant compte d'un niveau de confiance dans la dynamique du fluide.

Avantageusement, l'estimateur comprend un module de réglage d'un gain de compensation d'une dynamique du capteur.

Un tel module de réglage permet d'ajuster la correction de l'erreur de mesure en tenant compte d'un niveau de confiance dans la dynamique du capteur.

De préférence, l'estimateur est destiné à déterminer une température de gaz en amont d'une turbine du moteur à combustion interne.

Selon un mode de réalisation, le capteur est disposé au voisinage d'un collecteur d'échappement du moteur à combustion interne.

De préférence, le second module de réception est apte à recevoir au moins une donnée extérieure choisie parmi une température du fluide au voisinage d'une sortie de soupape du moteur à combustion interne, une température d'air extérieur et un débit traversant le moteur à combustion interne.

Selon un autre aspect, il est proposé un procédé d'estimation d'une température dans un moteur à combustion interne de véhicule automobile au moyen d'un estimateur tel que défini précédemment.

Selon un mode de mise en oeuvre, l'observateur détermine la température estimée du flux de fluide en appliquant

les équations :

[Math 1]

$$\frac{dT_{estcapteur}}{dt} = \frac{1}{\tau}\left(T_{estavt} - T_{estcapteur}\right) + k_{capteur}\left(T_{estcapteur} - T_{capteur}\right)$$

[Math 2]

$$\frac{dT_{estavt}}{dt} = Q_{mot}\beta\left(T_{evc} - T_{estavt}\right) - \gamma\left(T_{estavt} - T_{air}\right) + k_{gaz}\left(T_{estcapteur} - T_{capteur}\right)$$

où $T_{capteur}$ est le paramètre mesuré, $T_{estcapteur}$ est le paramètre estimé, $T_{estavt}$ est la température estimée du flux de fluide, $\tau$ est un temps de réponse du capteur, $k_{capteur}$ est un gain de l'observateur pour compenser la dynamique du capteur, $Q_{mot}$ est un débit traversant le moteur à combustion interne, $\beta$ est un coefficient d'inertie d'un collecteur d'échappement du moteur à combustion interne, $T_{evc}$ est une température du fluide au voisinage d'une sortie de soupape du moteur à combustion interne, $\gamma$ est une constante de temps d'échange air-collecteur du moteur à combustion interne, $T_{air}$ est une température d'air extérieur et $k_{gaz}$ est un gain de l'observateur pour compenser la dynamique des gaz.

Selon encore un autre aspect, il est proposé un programme d'ordinateur comprenant un code configuré pour, lorsqu'il est exécuté par un processeur ou une unité de contrôle électronique, mettre en oeuvre le procédé tel que défini précédemment.

D'autres buts, caractéristiques et avantages de l'invention apparaîtront la lecture de la description suivante, donnée uniquement à titre d'exemple non limitatif, et faite en référence aux dessins annexés sur lesquels :

La figure 1 représente schématiquement un moteur à combustion interne selon un aspect de l'invention,
La figure 2 représente schématiquement un estimateur de température du moteur à combustion interne de la figure 1,
La figure 3 et la figure 4 sont des graphes temporels illustrant une température réelle, une température mesurée et une température estimée au moyen de l'estimateur et du procédé d'estimation selon l'invention.

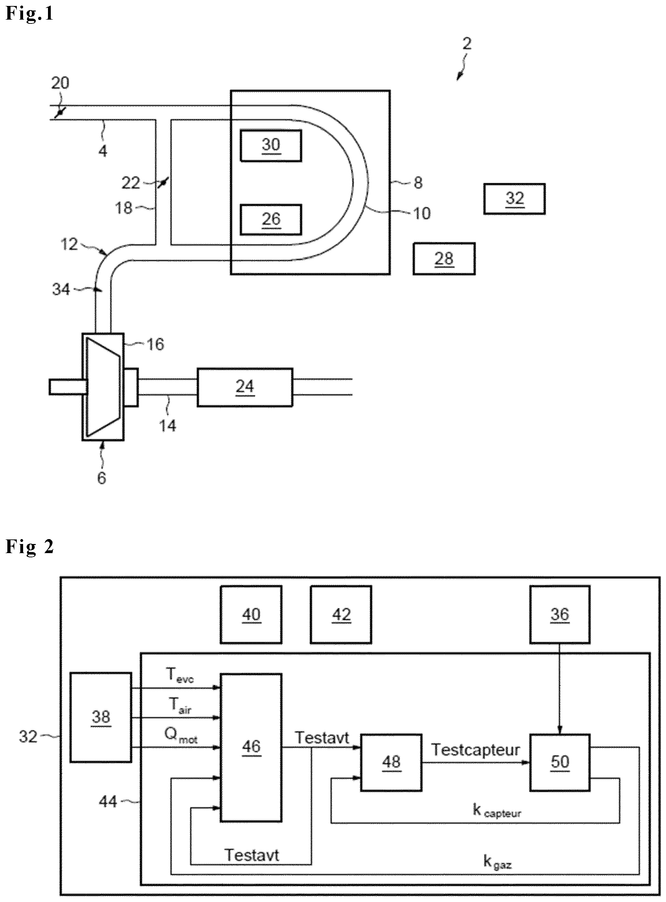

En référence à la figure 1, on a schématiquement représenté une partie d'un moteur à combustion interne 2 selon un aspect de la présente invention. Le moteur à combustion interne 2 est un moteur suralimenté. Le moteur à combustion interne 2 est destiné à être incorporé dans un véhicule automobile. Toutefois, on peut sans sortir du cadre de l'invention envisager d'incorporer le moteur à combustion interne 2 dans un autre type de dispositif, en particulier un dispositif de transport avec motorisation suralimentée, par exemple dans le domaine naval ou dans le domaine ferroviaire.

Le moteur à combustion interne 2 comprend un conduit d'admission à haute pression 4. Le conduit d'admission à haute pression 4 est disposée en aval d'un compresseur (non représenté). Le compresseur fait partie d'un turbocompresseur 6 et est situé en aval d'un conduit d'admission à basse pression (non représenté).

Le moteur à combustion interne 2 comprend un bloc-cylindres 8. Le bloc-cylindres 8 est schématiquement représenté par un rectangle sur la représentation schématique de la figure 1. Le bloc-cylindres 8 comprend en particulier une pluralité de cylindres formant un passage 10 pour un flux de fluide traversant le moteur à combustion interne 2.

Le moteur à combustion interne 2 comporte un conduit d'échappement à haute pression 12 situé en aval du bloc-cylindres 8, et un conduit d'échappement à basse pression 14, situé en aval du conduit d'échappement à haute pression 12. Le turbocompresseur 6 comprend une turbine 16 disposée entre les conduits 12 et 14.

Le moteur à combustion interne 2 comporte un conduit de recirculation 18 des gaz d'échappement, également connu sous la dénomination anglo-saxonne « Exhaust Gas Recirculation », ou sous l'acronyme correspondant « EGR ». Le conduit de recirculation 18 raccorde les conduits 4 et 12. En d'autres termes, le conduit de recirculation 18 est un conduit EGR à haute pression. On ne sort toutefois pas du cadre de l'invention en envisageant un conduit EGR à basse pression.

Le moteur à combustion interne 2 comporte une vanne d'admission 20 disposée sur le conduit 4, une vanne de recirculation 22 disposée sur le conduit 18 et un dispositif de traitement des gaz d'échappement 24 disposé sur le conduit 14.

Le moteur à combustion interne 2 comporte un capteur de température 26 capable de mesurer une température $T_{capteur}$. Le capteur 26 est situé dans un collecteur d'échappement (non représenté) du bloc-cylindres 8. Le moteur à combustion interne 2 comprend un capteur de température 28 capable de mesurer une température $T_{air}$ de l'air à l'extérieur. Le moteur à combustion interne 2 comporte en outre un débitmètre 30 capable de mesurer un débit moteur $Q_{mot}$ correspondant au débit du flux de fluide traversant le bloc-cylindres 8.

Le moteur à combustion interne 2 comprend en outre une unité de contrôle électronique 32. L'unité de contrôle électronique 32 a pour fonction d'estimer la température avant turbine $T_{avt}$. La température $T_{avt}$ correspond à la température du flux de fluide au point portant la référence 34 sur la figure 1.

En référence à la figure 2, l'unité de contrôle électronique 32 comporte un module de réception 36. Le module 36 est en communication d'informations avec le capteur de température 26, de manière à recueillir la température $T_{capteur}$ mesurée par le capteur 26.

L'unité de contrôle électronique 32 comporte un module de réception 38. Le module 38 est en communication d'informations avec le capteur de température 28 et le débitmètre 30 afin de récupérer les données mesurées $T_{air}$ et Qmot.

En outre, le module 38 est apte à recueillir une pluralité de données extérieures comprenant un temps de réponse $\tau$ du capteur 26, une température $T_{evc}$ de sortie de soupape du bloc-cylindres 8, un débit $Q_{egr}$ de recirculation des gaz d'échappement traversant le conduit 18, un débit Qt traversant la turbine 16, une chaleur massique $Cp_{coll}$ du collecteur d'échappement du moteur 2, une chaleur massique $Cp_{ech}$ des gaz d'échappement, une constante d'échange thermique $\alpha$ entre le collecteur d'échappement du moteur 2 et l'extérieur, un coefficient d'inertie $\beta$ du collecteur d'échappement du moteur 2 et une constante de temps y de l'échange entre l'air et le collecteur d'échappement du moteur 2.

Dans l'exemple illustré, les données extérieures $\tau$, $Cp_{coll}$, $Cp_{ech}$, $\alpha$ et $\beta$ sont estimées par calibration sur banc d'essai. Par exemple, les données $T_{evc}$, $Q_{egr}$, $Q_t$ sont estimées à partir d'autres données extérieures recueillies par l'unité de contrôle électronique 32.

L'unité de contrôle électronique 32 comporte un module de réglage 40. Le module 40 permet de régler un gain $k_{gaz}$ de compensation d'une dynamique du fluide traversant le bloc-cylindres 8.

L'unité de contrôle électronique 32 comporte un module de réglage 42 permettant de régler un gain $k_{capteur}$ de compensation d'une dynamique du capteur 26.

Afin de régler les gains $k_{gaz}$ et $k_{capteur}$, un opérateur évalue un niveau de confiance dans la dynamique du fluide traversant le bloc-cylindres 8 et un niveau de confiance dans la dynamique du capteur 26. Ensuite, l'opérateur sélectionne des valeurs de gains sur la base du tableau suivant :

Tableau 1

| | Haut niveau de confiance dans la dynamique du capteur | Haut niveau de confiance dans la dynamique du fluide | Haut niveau de confiance dans la valeur mesurée par le capteur |
|---|---|---|---|
| $k_{capteur}$ | Faible valeur | Sans influence | Valeur élevée |
| $k_{gaz}$ | Sans influence | Faible valeur | Valeur élevée |

Lorsque le niveau de confiance dans la dynamique du capteur est élevé, on peut se permettre une faible valeur du gain $k_{capteur}$, car on compense peu la dynamique du capteur par la mesure. Il en est de même pour la valeur du gain $k_{gaz}$ lorsque le niveau de confiance dans la dynamique du fluide est élevé. Lorsque le niveau de confiance dans la valeur mesurée par le capteur est élevé, on peut se permettre des gains $k_{gaz}$ et $k_{capteur}$ élevés car la mesure est précise.

Lorsque la valeur est « sans influence », cela signifie que le niveau de confiance n'influence pas la valeur du gain correspondant. Par exemple, pour le gain $k_{capteur}$ avec un heut niveau de confiance dans la dynamique du fluide, on sait qu'on a confiance dans la dynamique du fluide mais on ne sait pas quelle est la confiance dans le capteur ni dans sa dynamique, ces deux paramètres influenceront la valeur de $k_{capteur}$ mais le fait d'avoir confiance ou pas dans la dynamique du fluide n'influence pas ce choix.

L'unité de contrôle électronique 32 comporte un module de détermination 44. Le module 44 est en communication d'informations avec les modules 38, 36, 41 et 42. Le module 44 est fondé sur un observateur capable de déterminer une température estimée $T_{estavt}$ en utilisant les données extérieures recueillies par le module 38 et en utilisant une erreur de mesure de la température $T_{capteur}$. La température $T_{estavt}$ est la température au point 34 estimée par l'observateur.

A cet égard, le module 44 comprend un bloc de calcul 46. Le bloc de calcul 46 a pour fonction de calculer la température estimée $T_{estavt}$ du flux de fluide au point 34 en fonction de la température $T_{evc}$, de la température Tair et du débit Qmot.

Le module 44 comprend un bloc de calcul 48 capable de déterminer une estimation $T_{estcapteur}$ de la température indiquée par le capteur 26 en tenant compte de la température estimée $T_{estavt}$.

Le module 44 comporte un comparateur 50. Le comparateur 50 est capable de déterminer un écart entre la température estimée $T_{estavt}$ et l'estimation $T_{estcapteur}$ de la température mesurée. L'écart calculé corrigé par le gain $k_{capteur}$ est renvoyé par une boucle de retour au bloc 48. L'écart corrigé par le gain $k_{gaz}$ est renvoyé par une boucle de retour au bloc 46.

Grâce à cet agencement, l'unité de contrôle électronique 32 est capable d'estimer la température $T_{avt}$ par un observateur. Les calculs mis en oeuvre par les blocs 46, 48 et 50 vont maintenant être expliqués en référence aux équations suivantes.

Le capteur 26 est assimilé à un système d'ordre 1 régi par l'équation :

[Math 3]
$$\frac{dT_{capteur}}{dt} = \frac{\left(T_{avt} - T_{capteur}\right)}{\tau \times Q_{mot}}$$

Cela signifie que le capteur 26 est réchauffé par les gaz qui l'entoure, le temps de réponse $\tau$ est très dépendant du point de fonctionnement du moteur. Ce temps $\tau$ peut être rapporté au nombre adimensionnel de Nusselt, par exemple comme une fonction de la densité, de la chaleur latente, du diamètre, de la conductivité thermique et du nombre de Nusselt du capteur 26. Dans l'exemple illustré, le temps $\tau$ est calculé comme une fonction du débit Qmot.

La dynamique des gaz est obtenue grâce à un modèle rapide de température au niveau de la sortie soupape. Dans l'exemple illustré, la température $T_{evc}$ est supposée connue via un modèle de dégagement d'energie basé sur un capteur de pression dans un cylindre du bloc-cylindres 8. Alternativement, le modèle de température peut être cartographié sur banc.

On considère un bilan enthalpique au niveau du collecteur d'échappement en utilisant le premier principe de la thermodynamique dans le système collecteur. Un tel bilan s'écrit selon l'équation :

[Math 4]
$$dU_{collecteur} = dh_{moteur} - dh_{egr} - dh_{turbine} + \delta W_u + \delta Q_{pertes}$$

où $dU_{collecteur}$ est la variation de l'énergie interne du système collecteur, $dh_{moteur}$ est l'apport d'enthalpie venant des gaz provenant du moteur, $dh_{egr}$ est la perte d'enthalpie provenant de la fuite des gaz dans le conduit 18, $dh_{turbine}$ est la perte d'enthalpie provenant de la fuite des gaz dans la turbine 16, $\delta W_u$ est le travail des gaz dans le système et $\delta Q_{pertes}$ sont les transfert thermiques avec l'extérieur. Le travail $\delta W_u$ est considéré nul car la pression est supposée constante dans tout le système.

En appliquant la première loi de Joule pour exprimer l'énergie interne, on peut réécrire l'équation (4) sous la forme :

[Math 5]
$$m_{coll}Cp_{coll}dT = dh_{moteur} - dh_{egr} - dh_{turbine} + \delta Q_{pertes}$$

De plus, on peut exprimer les variations d'enthalpie des gaz à partir des expressions de débits et des températures. On a donc l'équation :

[Math 6]

$$m_{coll}Cp_{coll}dT = Q_{mot}C_{pech}T_{evc}.dt - Q_{egr}C_{pech}T_{avt}.dt - Q_t C_{pech}T_{avt}.dt + \delta Q_{pertes}$$

Dans l'équation (6), dt est un temps infinitésimal. Par ailleurs, on considère qu'il n'y a pas d'accumulation de gaz dans le collecteur d'échappement. On peut alors écrire :

[Math 7]

$$Q_{mot} = Q_{egr} + Q_t$$

Des équations (6) et (7), on peut écrire :

[Math 8]

$$m_{coll}Cp_{coll}dT = Q_{mot}C_{pech}T_{evc}.dt - Q_{mot}C_{pech}T_{avt}.dt + \delta Q_{pertes}$$

L'équation (8) se simplifie de la façon suivante :

[Math 9]

$$m_{coll}Cp_{coll}dT = Q_{mot}C_{pech}(T_{evc} - T_{avt}).dt + \delta Q_{pertes}$$

Les pertes $\delta Q_{pertes}$ sont calculées à partir de la loi de Fourier en considérant qu'il n'existe que des échanges conducto-convectifs avec l'air ambiant, à savoir :

[Math 10]

$$\delta Q_{pertes} = -\alpha(T_{avt} - T_{air}).dt$$

L'équation (9) peut être réécrite :

[Math 11]

$$m_{coll}Cp_{coll}dT = Q_{mot}C_{pech}(T_{evc} - T_{avt}).dt - \alpha(T_{avt} - T_{air}).dt$$

soit :

[Math 12]

$$\frac{m_{coll}Cp_{coll}dT}{dt} = Q_{mot}C_{pech}(T_{evc} - T_{avt}) - \alpha(T_{avt} - T_{air})$$

Comme on considère que m$_{coll}$. Cp$_{coll}$ est une constante et que la température dans le collecteur d'échappement est homogène à T$_{avt}$, on a directement :

[Math 13]

$$m_{coll}Cp_{coll}\frac{dT_{avt}}{dt} = Q_{mot}C_{pech}(T_{evc} - T_{avt}) - \alpha(T_{avt} - T_{air})$$

soit :

[Math 14]

$$\frac{dT_{avt}}{dt} = Q_{mot}\frac{C_{pech}}{m_{coll}Cp_{coll}}(T_{evc} - T_{avt}) - \frac{\alpha}{m_{coll}Cp_{coll}}(T_{avt} - T_{air})$$

On peut simplifier de sorte à obtenir l'équation :

[Math 15]

$$\frac{dT_{avt}}{dt} = Q_{mot}\beta\,(T_{evc} - T_{avt}) - \gamma(T_{avt} - T_{air})$$

avec :

[Math 16]

$$\beta = \frac{C_{pech}}{m_{coll}Cp_{coll}}$$

[Math 17]

$$\gamma = \frac{\alpha}{m_{coll}Cp_{coll}}$$

L'observateur est créé pour estimer la valeur de la température T$_{avt}$ à partir des équations (3) et (15) :

[Math 18]

$$\frac{dT_{estcapteur}}{dt} = \frac{1}{\tau}\left(T_{estavt} - T_{estcapteur}\right) + k_{capteur}(T_{estcapteur} - T_{capteur})$$

[Math 19]

$$\frac{dT_{estavt}}{dt} = Q_{mot}\beta\,(T_{evc} - T_{estavt}) - \gamma(T_{estavt} - T_{air}) + k_{gaz}(T_{estcapteur} - T_{capteur})$$

Ainsi, l'observateur utilise le fait que la valeur de $T_{capteur}$ est à la fois mesurée et calculée pour compenser les dynamiques des températures estimées en fonction de l'erreur du modèle pondéré par les gains de l'observateur $k_{gaz}$ et $k_{capteur}$.

La résolution du système d'équations différentielles précité se fait à l'aide d'un schéma numérique classique du premier ordre, par exemple un schéma numérique d'Euler. L'invention permet alors d'obtenir une estimation de la véritable température $T_{avt}$.

Selon un autre mode de réalisation, le module de réception 38 ne connaît pas la température $T_{evc}$. Dans ce cas, on néglige les variations d'enthalpie dans le collecteur d'échappement. L'équation (15) est alors simplifiée en :

[Math 20]
$$\frac{dT_{avt}}{dt} = -\gamma(T_{avt} - T_{air})$$

Cette équation revient à l'équation (15) dans laquelle β égale zéro. Dès lors, l'équation de l'observateur peut être calculée de la manière suivante :

[Math 21]
$$\frac{dT_{estcapteur}}{dt} = \frac{1}{\tau}\left(T_{estavt} - T_{estcapteur}\right) + k_{capteur}(T_{estcapteur} - T_{capteur})$$

[Math 22]
$$\frac{dT_{estavt}}{dt} = -\gamma(T_{estavt} - T_{air}) + k_{gaz}(T_{estcapteur} - T_{capteur})$$

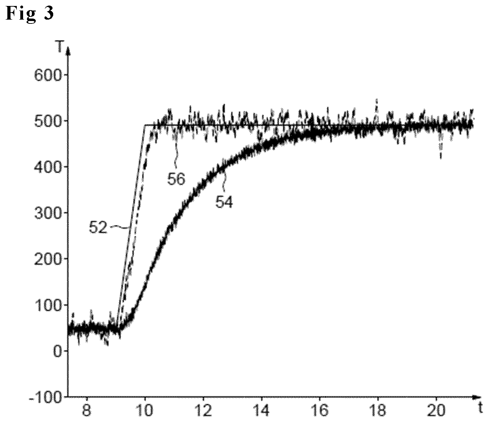

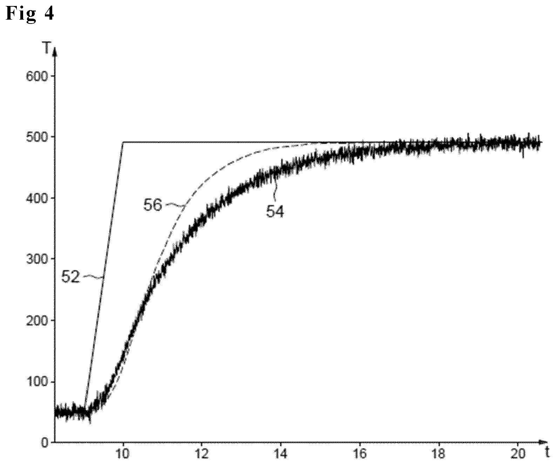

En référence maintenant aux figures 3 et 4, on a schématiquement représenté des graphes temporels de l'évolution de la température $T_{avt}$. Plus particulièrement, sur les figures 3 et 4, on a schématiquement représenté par le graphe 52 l'évolution de la température réelle $T_{avt}$, par le graphe 54 l'évolution de la température $T_{capteur}$ mesurée par le capteur 26, et par le graphe 56 l'évolution de la température estimée $T_{estavt}$. Dans l'exemple illustré, la température réelle $T_{avt}$ a été mesurée par un thermocouple de type K de 2 mm ayant un temps de réponse plus rapide que le capteur de série pour pouvoir être représentée sur les figures 3 et 4

Sur la figure 3, des valeurs relativement élevées ont été choisies pour les gains $k_{gaz}$ et $k_{capteur}$. En résultat, l'estimation $T_{estavt}$ est fortement perturbée par le bruit de sortie du signal $T_{capteur}$. Ainsi, la mise en oeuvre de l'observateur en utilisant des gains élevés permet un temps de réponse très faible mais présente une stabilité relativement mauvaise.

En référence à la figure 4, l'observateur a été mis en oeuvre avec des gains $k_{gaz}$ et $k_{capteur}$ faibles. En résultat, l'estimation $T_{estavt}$ permet de filtrer fortement le bruit mais n'apporte pas beaucoup de gain en temps de réponse par rapport à la sortie pure $T_{capteur}$ du capteur 26.

Ainsi, un opérateur peut continuer à effectuer des essais en modifiant les valeurs des gains de l'observateur jusqu'à obtenir une sortie qui permette à la fois de filtrer le bruit tout en présentant un temps de réponse suffisamment faible.

Au vu de ce qui précède, l'invention permet d'améliorer la précision et le temps de réponse de l'estimation de la température $T_{avt}$ dans le moteur à combustion interne, sans nécessiter d'incorporer un capteur supplémentaire.

**Revendications**

1. Estimateur (32) de température destiné à être incorporé dans un moteur à combustion interne (2) de véhicule automobile, comprenant un premier module de réception (36) d'un paramètre mesuré par un capteur (26) situé dans un flux de fluide traversant le moteur à combustion interne (2), un second module de réception (38) d'une donnée extérieure, et un module de détermination (44) d'une température du flux de fluide **caractérisé en ce que** le module de détermination (44) comprend un observateur apte à déterminer une température estimée du flux de fluide et un paramètre estimé lié au capteur (26), l'observateur étant configuré pour déterminer la température estimée du flux de fluide en tenant compte d'une erreur de mesure du paramètre estimé.

2. Estimateur (32) selon la revendication 1, dans lequel le capteur (26) est un capteur de température, le paramètre estimé étant une estimation de la température indiquée par le capteur (26).

3. Estimateur (32) selon la revendication 1 ou 2, comprenant un module de réglage (40) d'un gain de compensation d'une dynamique du fluide.

4. Estimateur (32) selon l'une quelconque des revendications 1 à 3, comprenant un module de réglage (42) d'un gain de compensation d'une dynamique du capteur.

5. Estimateur (32) selon l'une quelconque des revendications 1 à 4, destiné à déterminer une température de gaz en amont d'une turbine (16) du moteur à combustion interne (2).

6. Estimateur selon l'une quelconque des revendications 1 à 5, dans lequel le capteur est disposé au voisinage d'un collecteur d'échappement du moteur à combustion interne.

7. Estimateur (32) selon l'une quelconque des revendications 1 à 6, dans lequel le second module de réception (38) est apte à recevoir au moins une donnée extérieure choisie parmi une température du fluide au voisinage d'une sortie de soupape du moteur à combustion interne (2), une température d'air extérieur et un débit traversant le moteur à combustion interne (2).

8. Procédé d'estimation d'une température dans un moteur à combustion interne (2) de véhicule automobile au moyen d'un estimateur (32) selon l'une quelconque des revendications 1 à 7.

9. Procédé selon la revendication 8, dans lequel l'observateur détermine la température estimée du flux de fluide en appliquant les équations :

$$\frac{dT_{estcapteur}}{dt} = \frac{1}{\tau}\left(T_{estavt} - T_{estcapteur}\right) + k_{capteur}(T_{estcapteur} - T_{capteur})$$

$$\frac{dT_{estavt}}{dt} = Q_{mot}\beta(T_{evc} - T_{estavt}) - \gamma(T_{estavt} - T_{air}) + k_{gaz}(T_{estcapteur} - T_{capteur})$$

où $T_{capteur}$ est le paramètre mesuré, $T_{estcapteur}$ est le paramètre estimé, $T_{estavt}$ est la température estimée du flux de fluide, $\tau$ est un temps de réponse du capteur (26), $k_{capteur}$ est un gain de l'observateur pour compenser la dynamique du capteur (26), $Q_{mot}$ est un débit traversant le moteur à combustion interne (2), $\beta$ est un coefficient d'inertie d'un collecteur d'échappement du moteur à combustion interne (2), $T_{evc}$ est une température du fluide au voisinage d'une sortie de soupape du moteur à combustion interne (2), $\gamma$ est une constante de temps d'échange air-collecteur du moteur à combustion interne (2), $T_{air}$ est une température d'air extérieur et $k_{gaz}$ est un gain de l'observateur pour compenser la dynamique des gaz.

10. Programme d'ordinateur comprenant un code configuré pour, lorsqu'il est exécuté par un processeur ou une unité de contrôle électronique (32), mettre en oeuvre le procédé selon la revendication 8 ou 9.

**Patentansprüche**

1. Temperaturschätzer (32), der dafür bestimmt ist, in einen Verbrennungsmotor (2) eines Kraftfahrzeugs eingebaut zu werden, umfassend ein erstes Modul (36) zum Empfangen eines Parameters, der durch einen Sensor (26) gemessen wird, der sich in einem durch den Verbrennungsmotor (2) fließenden Fluidstrom befindet, ein zweites Modul (38) zum Empfangen einer externen Dateneinheit und ein Modul (44) zum Bestimmen einer Temperatur des Fluidstroms, **dadurch gekennzeichnet, dass** das Bestimmungsmodul (44) einen Beobachter umfasst, der geeignet ist, eine geschätzte Temperatur des Fluidstroms und eines geschätzten Parameters, der mit dem Sensor (26) verknüpft ist, zu bestimmen, wobei der Beobachter konfiguriert ist, um die geschätzte Temperatur des Fluidstroms unter Berücksichtigung eines Messfehlers für den geschätzten Parameter zu bestimmen.

2. Schätzer (32) nach Anspruch 1, wobei der Sensor (26) ein Temperatursensor ist, wobei der geschätzte Parameter eine Schätzung der durch den Sensor (26) angezeigten Temperatur ist.

3. Schätzer (32) nach Anspruch 1 oder 2, umfassend ein Modul (40) zum Regeln einer Kompensationsverstärkung einer Fluiddynamik.

4. Schätzer (32) nach einem der Ansprüche 1 bis 3, umfassend ein Modul (42) zum Regeln einer Kompensationsverstärkung einer Sensordynamik.

5. Schätzer (32) nach einem der Ansprüche 1 bis 4, der dafür bestimmt ist, eine Gastemperatur vor einer Turbine (16) des Verbrennungsmotors (2) zu bestimmen.

6. Schätzer nach einem der Ansprüche 1 bis 5, wobei der Sensor in der Nähe eines Abgaskrümmers des Verbrennungsmotors angeordnet ist.

7. Schätzer (32) nach einem der Ansprüche 1 bis 6, wobei das zweite Empfangsmodul (38) geeignet ist, mindestens eine externe Dateneinheit zu empfangen, die aus einer Temperatur des Fluids in der Nähe eines Ventilauslasses des Verbrennungsmotors (2), einer Außenlufttemperatur und eines durch den Verbrennungsmotor (2) fließenden Durchsatzes ausgewählt ist.

8. Verfahren zum Schätzen einer Temperatur in einem Verbrennungsmotor (2) eines Kraftfahrzeugs mittels eines Schätzers (32) nach einem der Ansprüche 1 bis 7.

9. Verfahren nach Anspruch 8, wobei der Beobachter die geschätzte Temperatur des Fluidstroms bei Anwenden der Gleichungen bestimmt:

$$\frac{dT_{geschSensor}}{dt} = \frac{1}{\tau}\left(T_{geschavt} - T_{geschSensor}\right) + k_{Sensor}\left(T_{geschSensor} - T_{Sensor}\right)$$

$$\frac{dT_{geschavt}}{dt} = Q_{Mot}\beta(T_{evc} - T_{geschavt}) - \gamma(T_{geschavt} - T_{luft}) + k_{Gaz}(T_{geschSensor} - T_{Sensor})$$

wobei $T_{Sensor}$ der gemessene Parameter ist, $T_{Schätzer}$ der geschätzte Parameter ist, $T_{geschavt}$ die geschätzte Temperatur des Fluidstroms ist, $\tau$ eine Reaktionszeit des Sensors (26) ist, $k_{Sensor}$ eine Beobachterverstärkung zum Kompensieren der Dynamik des Sensors (26) ist, $Q_{Mot}$ ein durch den Verbrennungsmotor (2) fließender Durchsatz ist, $\beta$ ein Trägheitskoeffizient eines Abgaskrümmers des Verbrennungsmotors (2) ist, $T_{evc}$ eine Temperatur des Fluids in der Nähe eines Ventilauslasses des Verbrennungsmotors (2) ist, $\gamma$ eine Zeitkonstante des Luftsammleraustauschs des Verbrennungsmotors (2) ist, $T_{Luft}$ eine Außenlufttemperatur ist und $k_{Gas}$ eine Beobachterverstärkung zum Kompensieren der Gasdynamik ist.

10. Computerprogramm, umfassend einen Code, der konfiguriert ist, um, wenn er durch einen Prozessor oder eine elektronische Steuereinheit (32) ausgeführt wird, das Verfahren nach Anspruch 8 oder 9 zu implementieren.

**Claims**

1. A temperature estimator (32) for incorporation in a motor vehicle internal combustion engine (2), comprising a first module (36) for receiving a parameter measured by a sensor (26) located in a fluid flow passing through the internal combustion engine (2), a second module (38) for receiving external data, and a module (44) for determining a temperature of the fluid flow, **characterized in that** the determination module (44) comprises an observer able to determine an estimated temperature of the fluid flow and an estimated parameter linked to the sensor (26), the observer being configured to determine the estimated temperature of the fluid flow taking into account a measurement error of the estimated parameter.

2. The estimator (32) according to claim 1, wherein the sensor (26) is a temperature sensor, the estimated parameter being an estimate of the temperature indicated by the sensor (26).

3. The estimator (32) according to claim 1 or 2, comprising a module (40) for adjusting a fluid dynamics compensation gain.

4. The estimator (32) according to any one of claims 1 to 3, comprising a module (42) for adjusting a sensor dynamics compensation gain.

5. The estimator (32) according to any one of claims 1 to 4, for determining a gas temperature upstream of a turbine (16) of the internal combustion engine (2).

6. The estimator according to any one of claims 1 to 5, wherein the sensor is arranged in the vicinity of an exhaust manifold of the internal combustion engine.

7. The estimator (32) according to any one of claims 1 to 6, wherein the second receiving module (38) is able to receive at least one external datum selected from a temperature of the fluid in the vicinity of a valve outlet of the internal combustion engine (2), an external air temperature and a flow rate through the internal combustion engine (2).

8. A method for estimating a temperature in a motor vehicle internal combustion engine (2) by means of an estimator (32) according to any one of claims 1 to 7.

9. The method according to claim 8, wherein the observer determines the estimated temperature of the fluid flow by applying the equations:

$$\frac{dT_{estsensor}}{dt} = \frac{1}{\tau}\ (T_{estavt}\text{-}T_{estsensor})\ +\ k_{sensor}(T_{estsensor}\text{-}T_{sensor})$$

$$\frac{dT_{estavt}}{dt} =\ Q_{mot}\beta(T_{evc}\text{-}T_{estavt}) - \gamma(T_{estavt}\text{-}T_{air}) + k_{gas}(T_{estsensor}\ -\ T_{sensor})$$

where $T_{sensor}$ is the measured parameter, $T_{estsensor}$ is the estimated parameter, $T_{estavt}$ is the estimated temperature of the fluid flow, $\tau$ is a response time of the sensor (26), $k_{sensor}$ is an observer gain to compensate for the dynamics of the sensor (26), $Q_{mot}$ is a flow rate through the internal combustion engine (2), $\beta$ is a coefficient of inertia of an exhaust manifold of the internal combustion engine (2), $T_{evc}$ is a temperature of the fluid in the vicinity of a valve outlet of the internal combustion engine (2), $\gamma$ is an air-collector exchange time constant of the internal combustion

engine (2), $T_{air}$ is an external air temperature and $k_{gas}$ is an observer gain to compensate for gas dynamics.

10. A computer program comprising code configured, when executed by a processor or electronic control unit (32), to implement the method according to claim 8 or 9.

**Fig.1**

**Fig 2**

Fig 3

**Fig 4**

**EP 4 093 956 B1**

**RÉFÉRENCES CITÉES DANS LA DESCRIPTION**

**Documents brevets cités dans la description**

- EP 2796841 A
- DE 102013203175 A1